Europäisches Patentamt

European Patent Office

Office européen des brevets

(11) Veröffentlichungsnummer: **0 551 651 A1**

# EUROPÄISCHE PATENTANMELDUNG

(21) Anmeldenummer: **92121988.7**

(22) Anmeldetag: **24.12.92**

(51) Int. Cl.5: **G02B 6/28**

(30) Priorität: **17.01.92 DE 4201068**

(43) Veröffentlichungstag der Anmeldung:
**21.07.93 Patentblatt 93/29**

(84) Benannte Vertragsstaaten:
**CH DE FR GB IT LI NL SE**

(71) Anmelder: **kabelmetal electro GmbH**
**Kabelkamp 20 Postfach 260**
**W-3000 Hannover 1(DE)**
Anmelder: **BODENSEEWERK GERÄTETECHNIK GmbH**
**Alte Nussdorfer Strasse 15, Postfach 101 155**
**W-7770 Überlingen(DE)**

(72) Erfinder: **Stieb, Werner, Dipl.-Ing.**
**Bernerskamp 3**
**W-3060 Stadthagen(DE)**
Erfinder: **Kämper, Achim, Dipl.-Ing.**
**Hauptstrasse 191**
**W-3061 Wiedensahl(DE)**
Erfinder: **Moratzky, Matthias, Dipl.-Ing.**
**Kapellenweg 3**
**W-6750 Kaiserslautern(DE)**
Erfinder: **Langner, Klaus Alexander**
**Alte Dorfstrasse 81**
**W-7770 Überlingen(DE)**

(54) **Verfahren zur Herstellung eines faseroptischen Ringresonators.**

(57) Bei einem Verfahren zur Herstellung eines als Ringresonator zu betreibenden optischen Bauelementes wird eine optische Faser (2) in Form einer Schleife (1) gelegt, am "Keuzungspunkt" (7) durch Verschmelzen der optischen Faser und Tapern ein Koppler hergestellt und während der Herstellung des Kopplers in den Ring eine Dämpfung (5,6,10) von mehr als 20 dB eingebracht, die nach Fertigstellung des Kopplers wieder entfernt wird.

Fig 1

Die Erfindung betrifft ein Verfahren zur Herstellung eines als Ringresonator zu betreibenden optischen Bauelementes, bestehend aus einer zu einem in sich geschlossenen Ring geformten optischen Faser sowie mindestens zwei Toren zum Ein- bzw. Auskoppeln von Lichtleistung.

Ein Faser-Ringresonator besteht aus einem geschlossenen Faserumlaufpfad in den mittels Kopplern Licht ein- und ausgekoppelt werden kann. Um den Faserring in Resonanz betreiben zu können, ist eine extrem schmalbandige Laserquelle als Sender erforderlich.

Die Güte des Resonators hängt im wesentlichen ab von einer genauen Abstimmung des Koppelverhältnisses, d.i. der Grad der Überkopplung, auf die Summe der optischen Verluste in Ring und Koppler. Im Idealfall wird genau der Anteil der eingespeisten Lichtleistung vom Koppler in den Ring gekoppelt, der dort durch die Dämpfung der Faser und im Koppler beim Umlauf durch den Ring verlorengeht. Die Güte des Resonators erhöht sich mit sinkenden Verlusten im Koppler und im Faserring. Verluste, z.B. durch einen Fusionsspleiß sind demnach möglichst zu vermeiden.

Bei der Herstellung eines Kopplers aus zwei nebeneinanderliegenden optischen Fasern werden die Fasern auf einer vorgegebenen Länge nebeneinanderliegend zur gegenseitigen Berührung gebracht und durch Wärmezufuhr miteinander verschmolzen. Gleichzeitig wird durch axiale Zugbelastung der Querschnitt der miteinander verschmolzenen Fasern verringert. Ein nach diesem Verfahren hergestellter Koppler wird allgemein als Schmelzkoppler bezeichnet. Wesentlich bei der Fertigung solcher Koppler ist, daß während der Herstellung, zumindest jedoch während des Ziehvorganges, die Übertragungseigenschaften der Fasern gemessen werden. Dazu wird in eine der optischen Fasern eine Lichtleistung eingespeist und am anderen Ende der Faser sowie an den Enden der anderen Faser die ankommende Lichtleistung gemessen. Zu Beginn der Fertigung wird nahezu 100 % der in die erste optische Faser eingespeisten Lichtleistung an deren anderem Ende austreten. Eine Einkopplung von Lichtleistung in die neben der ersten Faser befindliche zweite Faser findet zunächst noch nicht statt. Erst wenn die Verschmelzung und Verjüngung der Fasern erfolgt, wird ein Teil der Lichtleistung übergekoppelt, der sich beim Ziehen vergrößert. (DE-A$_1$-3733138)

Der Erfindung liegt die Aufgabe zugrunde, unter Zuhilfenahme des bekannten Kopplerziehverfahrens ein Bauelement herzustellen, welches als Ringresonator betrieben werden kann. Ein wesentliches Problem hierbei besteht darin, daß die Ausgangsleistung während der ganzen Herstellung des Bauelements bei ca. 100 % der Eingangsleistung feststeht, wobei die Kopplerverluste und Faserverluste bei dieser Betrachtung unberücksichtigt bleiben. Die engere Aufgabe besteht demnach darin, die Ausgangsleistung als Prozeßparameter für die Einstellung des gewünschten Koppelverhältnisses zugänglich zu machen.

Diese Aufgabe wird dadurch gelöst, daß eine optische Faser in Form einer Schleife gelegt wird, daß am "Kreuzungspunkt" durch Verschmelzen und Tapern ein Koppler hergestellt wird und daß während der Herstellung des Kopplers in den Ring eine Dämpfung von mehr als 20 dB eingebracht wird, die nach Fertigstellung des Kopplers wieder entfernt wird.

Durch die erfindungsgemäße Maßnahme ist die Ausgangsleistung zu Beginn der Herstellung (Koppelverhältnis = 0 % / 100 %) nahezu 0. Mit durch das Verschmelzen und Ziehen größer werdendem Koppelverhältnis steigt die Ausgangsleistung proportional an und der Herstellungsprozeß kann bei der gewünschten Ausgangsleistung und dem sich damit ergebenden Koppelverhältnis beendet werden. Bei der Herstellung von Faser-Ringresonatoren ist das gewünschte Koppelverhältnis z.B. 99 % / 1 %. Die Dämpfung kann nun aus dem Ring entfernt werden und das Bauteil kann als Resonator betrieben werden.

Die Dämpfung kann in besonders einfacher Weise durch eine Krümmung der optischen Faser erzeugt werden. Hierdurch wird im Bereich der Krümmung die eingespeiste Lichtleistung in dem gewünschten Maß abgestrahlt.

Die Krümmung wird zweckmäßigerweise durch Aufwickeln der optischen Faser auf einen Kern erzeugt. In der Praxis hat es sich als ausreichend erwiesen, mindestens fünf Windungen auf einen Kern mit einem Durchmesser von weniger als 10 mm aufzubringen. Nach Fertigstellung des Kopplers wird der Kern herausgezogen.

Es besteht auch die Möglichkeit, die Dämpfung durch einen Biegekoppler zu erzeugen, der die ausgekoppelte Lichtleistung auf eine Fotodiode leitet. Die Fotodiode stellt dann das für den Fertigungsprozeß gewünschte Signal zur Verfügung.

Durch die erfindungsgemäßen Maßnahmen läßt sich ein Koppler, bei dem die Tore 2 und 4 spleißlos durch eine optische Faser verbunden sind, mit der gleichen Genauigkeit und Reproduzierbarkeit wie ein herkömmlicher 4-Tor-Koppler herstellen. Für die Verwendung des Bauteils als Ringresonator ist wesentlich, daß die Verluste im Koppler möglichst gering gehalten werden.

Unter einer optischen Faser soll hier eine optische Glasfaser, z.B. eine Einmodenfaser verstanden werden, die eine Kunststoffschicht (Coating) zur Erhöhung der mechanischen Stabilität aufweist. Es versteht sich von selbst, daß in dem Bereich, in dem die Verschmelzung der Fasern vor sich geht, die Kunststoffschicht vorher entfernt wurde. Mehrmodenfasern und auch Kunststoffasern sind jedoch auch im Sinne der Erfindung einsetzbar.

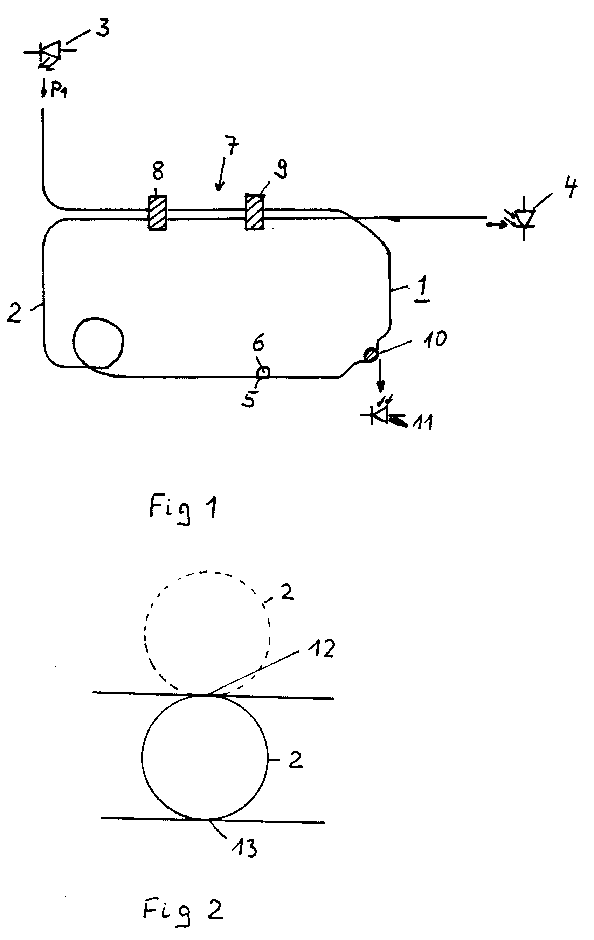

Die Erfindung ist anhand der in den Figuren 1 und 2 schematisch dargestellten Ausführungsbeispiele näher erläutert.

In der Figur 1 ist eine Faserschleife 1 aus einem Lichtwellenleiter 2 bestehend aus einer optischen Glasfaser und einer Kunststoffschicht dargestellt. An das eine Ende des Lichtwellenleiters 2 ist ein Sender 3, vorzugsweise eine Laserdiode, angeschlossen, der Licht in den Lichtwellenleiter 2 einspeist. An das andere Ende ist ein Empfänger 4, vorzugsweise eine Photodiode, angeschlossen, der die Intensität bzw. Leistung des ankommenden Lichtes messen und auswerten kann. Im dargestellten Beispiel wird nahezu die gesamte vom Sender 3 in den Lichtwellenleiter 2 eingespeiste Leistung vom Empfänger 4 empfangen. Bringt man eine Dämpfung in die Schleife 1 ein, z.B. indem man den Lichtwellenleiter 2 mit einigen Windungen 5 auf einen Kern 6 aufwickelt, wird die Leistung soweit gedämpft, daß keine Lichtleistung am Empfänger 4 ankommt. Diese Erscheinung wird ausgenutzt, an der Stelle 7 einen Koppler mit einem bestimmten Koppelverhältnis herzustellen. Die Technik der Kopplerherstellung ist aus der DE-OS 37 33 138 bekannt. Zwei abisolierte Bereiche des Lichtwellenleiters 2 werden aneinandergelegt, der Bereich bis auf Schmelztemperatur des Glases erwärmt und der Schmelzbereich mittels der Klemmen 8 und 9 in längsaxialer Richtung gezogen. Während dieses Vorganges wird Lichtenergie über den Sender 3 in den Lichtwellenleiter 2 eingespeist. Zu Beginn wird keine Lichtenergie am Empfänger 4 gemessen. Mit zunehmender Verschmelzung der Lichtwellenleiterbereiche wird im Kopplerbereich 7 Licht überkoppelt, so daß unter Umgehung der Schleife 1 Lichtenergie direkt aus dem Lichtwellenleiter 2 zwischen Sender 3 und Koppler 7 in den Lichtwellenleiter 2 zwischen Koppler 7 und Empfänger 4 gelangt und am Empfänger 4 detektiert werden kann. Wenn das gewünschte Koppelverhältnis erreicht ist, wird der Ziehprozeß und die Wärmezufuhr abgebrochen. Der Ringresonator ist einsatzbereit, wenn der Kern 6 aus den Windungen 5 herausgezogen wird, die sich dann auflösen. In der Figur 1 ist noch eine Alternative dargestellt, nach der anstelle der Windungen 5 und dem Kern 6 ein an sich bekannter Biegekoppler 10 vorgesehen ist, der Lichtleistung auf eine Photodiode 11 abstrahlt. Auf diese Weise kann eine in den Ring 1 eingekoppelte Lichtleistung als Regelgröße für die Prozeßsteuerung zur Verfügung gestellt werden und damit das Koppelverhältnis und die Kopplerverluste bestimmt werden.

Die nach dem erfindungsgemäßen Verfahren hergestellten Bauelemente sind als Ringresonatoren vorteilhaft einsetzbar, wenn es gelingt,daß die im Ring gedämpfte Lichtleistung über das Koppelverhältnis gerade ersetzt wird.Da die Dämpfung in dem System Koppler-Ring bei den nach der Lehre der Erfindung hergestellten Bauelementen sehr gering ist, wird eine hohe Güte des Resonators erreicht. Die Verluste in dem Ring sind ziemlich genau zu schätzen, da die Werte der Glasfaser bzw. des Lichtwellenleiters bekannt sind. Außerdem sind die Verluste im Koppler ziemlich genau zu schätzen oder beim Einsatz eines Biegekopplers zu messen.

In der Figur 2 ist ein spleißloser Ringresonator mit zwei Kopplern 12 und 13 dargestellt. Das erfindungsgemäße Verfahren ist hervorragend geeignet, auch einen solchen Ringresonator herzustellen.

Hierzu wird der Lichtwellenleiter 2 nach Art einer 8 verlegt (siehe gestrichelte Linie) und zunächst der Koppler 12 wie oben beschrieben hergestellt, wobei die Dämpfung in dem gestrichelten Bereich durch enge Windungen 5 oder durch einen Biegekoppler 10 erzeugt wird.

Anschließend wird der Koppler 13 wie oben beschrieben hergestellt und die Dämpfung in dem unteren Faserring erzeugt.

Sodann wird der Lichtwellenleiter 2 im gestrichelten Bereich durchtrennt.

Es ist so ein optisches Bauteil entstanden, welches im Prinzip aus zwei 4-Tor Kopplern besteht, von denen jeweils zwei Tore spleißlos miteinander verbunden sind.

Solche Bauteile finden hervorragend Anwendung als Rotationssensoren (Sagnac-Effekt). Es können jedoch auch noch weitere Koppler eingebaut werden. Solche Bauteile können in der Übertragungstechnik als Laufzeit- bzw. Verzögerungsglieder eingesetzt werden.

Die nach der Lehre der Erfindung hergestellten optischen Bauteile sind besonders als Brillouin-Laser sowie dotierte Faserringlaser geeignet.

**Patentansprüche**

1. Verfahren zur Herstellung eines als Ringresonator zu betreibenden optischen Bauelementes, bestehend aus einer zu einem in sich geschlossenen Ring geformten optischen Faser sowie mindestenszwei Toren zum Ein- bzw. Auskoppeln von Lichtleistung, dadurch gekennzeichnet, daß eine optische Faser in Form einer Schleife gelegt wird, daß am "Keuzungspunkt" durch Verschmelzen der optischen Faser und Tapern ein Koppler hergestellt wird und daß während der Herstellung des Kopplers in den Ring eine Dämpfung von mehr als 20 dB eingebracht wird, die nach Fertigstellung des Kopplers wieder entfernt wird.

2.    Verfahren nach Anspruch 1, dadurch gekennzeichnet, daß die Dämpfung durch eine Krümmung der optischen Faser erzeugt wird.

3.    Verfahren nach Anspruch 1 oder 2, dadurch gekennzeichnet, daß die Dämpfung durch Aufwickeln der optischen Faser auf einen Kern erzeugt wird.

4.    Verfahren nach Anspruch 3, dadurch gekennzeichnet, daß mindestens fünf Windungen auf einen Kern von weniger als 10 mm Durchmesser aufgebracht werden.

5.    Verfahren nach einem der Ansprüche 1 bis 4, dadurch gekennzeichnet, daß die Dämpfung durch einen Biegekoppler erzeugt wird, der die ausgekoppelte Lichtleistung auf eine Fotodiode leitet.

Fig 1

Fig 2

Europäisches
Patentamt

**EUROPÄISCHER RECHERCHENBERICHT**

Nummer der Anmeldung

EP    92 12 1988

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | JOURNAL OF LIGHTWAVE TECHNOLOGY. Bd. 8, Nr. 8, August 1990, NEW YORK US Seiten 1212 - 1220 ANDRES ET AL. * Seite 1216, rechte Spalte - Seite 1217, linke Spalte; Abbildung 1 * --- | 1,2,5 | G02B6/28 |
| A | WO-A-8 602 171 (POLAROID) * Seite 13, Zeile 6 - Zeile 22; Abbildungen 3,6 * --- | 1 | |
| A | PATENT ABSTRACTS OF JAPAN vol. 14, no. 422 (P-1104)12. September 1990 & JP-A-21 65 107 ( FUJITSU ) 26. Juni 1990 * Zusammenfassung * --- | 1 | |
| A | EP-A-0 174 014 (HITACHI) * Seite 31, Zeile 10 - Zeile 23; Abbildungen 12,13 * ----- | 1 | |

|  | RECHERCHIERTE SACHGEBIETE (Int. Cl.5) |
|---|---|
|  | G02B |

Der vorliegende Recherchenbericht wurde für alle Patentansprüche erstellt

| Recherchenort | Abschlußdatum der Recherche | Prüfer |
|---|---|---|
| BERLIN | 13 APRIL 1993 | VON  MOERS F. |